# EUROPÄISCHE PATENTANMELDUNG

(11) **EP 1 858 151 A2**
(43) Veröffentlichungstag der Anmeldung: **21.11.2007**
(21) Anmeldenummer: 07104198.2
(22) Anmeldetag: 15.03.2007
(51) Int. Cl.: H02P 1/00, H02M 7/06

(54) **Anordnung zum Anschließen eines Elektromotors an ein Stromnetz und Verfahren zum Betreiben der Anordnung**

(30) Priorität: 19.05.2006 DE 102006023610
(71) Anmelder: Siemens Aktiengesellschaft Österreich, 1210 Wien (AT)
(72) Erfinder: Fasching, Martin, 3033 Altlengbach (AT); Geiszler, Franz, 7023 Stöttera (AT)

(57) **Zusammenfassung**

Die Erfindung betrifft eine Schaltungsanordnung zum Anschließen eines Elektromotors (9) an ein Stromnetz (1), wobei ein Zwischenkreiskondensator (7) über eine Gleichrichterbrücke (2) mit dem Stromnetz (1) verbunden ist und wobei ein Bremswiderstand (3) vorgesehen ist, welcher in Reihe mit einem ersten Schaltelement (4) parallel zum Zwischenkreiskondensator (7) angeordnet ist und wobei ein zweites Schaltelement (5) vorgesehen ist, mittels welchem der Bremswiderstand (3) in Reihe zwischen den Zwischenkreiskondensator (7) und die Gleichrichterbrücke (2) schaltbar ist. Der für starke Impulslast und Dauerlast ausgelegt Bremswiderstand (3) ist damit in einfacher Weise als Vorladewiderstand für den Zwischenkreiskondensator (7) nutzbar.

## Beschreibung

Die Erfindung betrifft eine Schaltungsanordnung zum Anschließen eines Elektromotors an ein Stromnetz, wobei ein Zwischenkreiskondensator über eine Gleichrichterbrücke mit dem Stromnetz verbunden ist und wobei ein Bremswiderstand vorgesehen ist, welcher in Reihe mit einem ersten Schaltelement parallel zum Zwischenkreiskondensator angeordnet ist. Des Weiteren betrifft die Erfindung eine Motorsteuerung, welche diese Schaltungsanordnung umfasst und ein Verfahren zum Betreiben der Schaltungsanordnung.

Zur Steuerung von Elektromotoren werden diese in der Regel über eine Zwischenkreisschaltung mittels Gleichrichterbrücke an ein zumeist dreiphasiges Stromnetz angeschlossen. Die Zwischenkreisschaltung umfasst dabei einen Zwischenkreiskondensator, welcher aus dem Stromnetz aufgeladen wird. Bei fehlender Strombegrenzung wird dabei der Ladestrom nur durch die Netzimpedanz und Widerstände im Lastkreis begrenzt, welche beispielsweise aus Eingangsfilterimpedanzen, Dioden-Ersatzwiderständen, parasitären Widerständen von Kondensatoren oder Zuleitungswiderständen gebildet werden. Dieser Ladestrom kann Netzsicherungen oder die Netzdioden der Gleichrichterbrücke vorschädigen oder zerstören.

Deshalb ist in der Regel eine Vorladeschaltung erforderliche, welche den Spitzenwert des Ladestromes auf zulässige Werte begrenzt. Nach dem Stand der Technik kennt man beispielsweise Anordnungen, bei welchen die Gleichrichterbrücke als gesteuerte Thyristorbrücke ausgebildet ist. Bei Verwendung einer solchen gesteuerten Gleichrichterbrücke wird die Spannung am Zwischenkreis über Kommutierungs- und Netzdrosseln von Null Volt auf den Maximalwert über veränderte Zündwinkel der Thyristoren gesteuert hochgefahren. Derartige Schaltungen werden insbesondere dann angewendet, wenn die Zwischenkreisspannung lastbedingt stationär auf einem niedrigen Niveau gehalten werden soll (z.B. Gleichstromsteller). Nachteilig ist dabei der zusätzliche Bauteil- und Steuerungsaufwand.

Eine andere bekannte Vorladung des Zwischenkreises sieht die Verwendung von Vorladewiderständen vor. Dabei wird ein Vorwiderstand über ein Relais in Serie zum Zwischenkreis geschaltet. Nach erfolgter Aufladung wird der Widerstand wieder weggeschaltet und das Antriebssystem kann leistungsmäßig belastet werden.

Nachteilig ist hierbei, dass für eine entsprechende Dimensionierung des Vorladewiderstandes eine maximale Anzahl von Vorladezyklen je Zeiteinheit zugrunde zu legen ist. Werden diese Vorgaben im Betrieb überschritten, kommt es zur Überlastung des Vorladewiderstandes. Zusätzliche Sicherheiten bei der Dimensionierung des Vorladewiderstandes führen in Bezug auf die Antriebsleistung zu einer unverhältnismäßigen Verteuerung der gesamten Anordnung.

Bei Antriebssystemen, in welchen der Elektromotor zeitweise als Generator durch die Last angetrieben wird, muss der Zwischenkreis die rückgelieferte Energie aufnehmen. Beispiele hierfür sind Bremsvorgänge bei Aufzügen, Kränen, absenkende Hebewerke etc.

Bei gesteuerten und ungesteuerten Gleichrichterbrücken mit Vorladeschaltung kann diese Energie nicht an das speisende Stromnetz abgegeben werden. Nach dem Stand der Technik wird daher bei derartigen Antriebssystemen ein Widerstand, Bremswiderstand oder Bremschopper genannt, eingesetzt. Dieser Bremswiderstand wird über ein Schaltelement parallel zum Zwischenkreiskondensator geschaltet. Die Schaltvorgänge sind dabei in der Regel getaktet und dienen dazu, vom Antrieb rückgelieferte Energie im Bremswiderstand zu verbrauchen und damit die Zwischenkreisspannung abzusenken.

Der Erfindung liegt die Aufgabe zugrunde, für eine Anordnung der eingangs genannten Art eine Verbesserung gegenüber dem Stand der Technik anzugeben.

Erfindungsgemäß wird diese Aufgabe gelöst durch eine Schaltungsanordnung zum Anschließen eines Elektromotors an ein Stromnetz, wobei ein Zwischenkreiskondensator über eine Gleichrichterbrücke mit dem Stromnetz verbunden ist und wobei ein Bremswiderstand vorgesehen ist, welcher in Reihe mit einem ersten Schaltelement parallel zum Zwischenkreiskondensator angeordnet ist und wobei des Weiteren ein zweites Schaltelement vorgesehen ist, mittels welchem der Bremswiderstand in Reihe zwischen den Zwischenkreiskondensator und die Gleichrichterbrücke schaltbar ist.

Der Bremswiderstand ist entsprechend der zu bremsenden Last dimensioniert. Ausschlaggebend dafür ist, wie hoch die rückgelieferte Energie ist, in welcher Zeit sie anfällt und verbraucht werden muss und wie oft Bremszyklen je Zeiteinheit auftreten. Die in Bremszyklen zu verbrauchende Energie ist dabei deutlich höher als die Vorladeenergie des Zwischenkreiskondensators. Der für starke Impulslast und Dauerlast ausgelegt Bremswiderstand bietet somit ausreichende Sicherheiten für die Nutzung als Vorladewiderstand. Eine Überlastung des Bremswiderstands in seiner erfindungsgemäßen Nutzung als Vorladewiderstand ist ausgeschlossen.

Eine vorteilhafte Ausprägung der Erfindung sieht vor, dass der Zwischenkreiskondensator mit einem ersten Anschluss an einen ersten Ausgang der Gleichrichterbrücke angeschlossen ist und dass der Zwischenkreiskondensator mit einem zweiten Anschluss über das zweite Schaltelement an einen zweiten Ausgang der Gleichrichterbrücke angeschlossen ist und dass des Weiteren der zweite Ausgang der Gleichrichterbrücke über den Bremswiderstand und das erste Schaltelement an den ersten Anschluss des Zwischenkreiskondensators geschaltet ist und dass ein Verbindungspunkt zwischen dem Bremswiderstand und dem ersten Schaltelement über eine Freilaufdiode mit dem zweiten Anschluss des Zwischenkreiskondensators verbunden ist. Damit ist ein einfacher Schaltungsaufbau für die Nutzung des Bremswiderstandes als Vorladewiderstand gegeben.

Von Vorteil ist es des Weiteren, wenn das zweite Schaltelement als Relais ausgebildet ist. Ein Relais ist ein zuverlässiges und kostengünstiges Bauelement und weist im angezogenen Zustand gegenüber elektronischen Schaltelementen wie Transistoren geringere Durchgangswiderstände auf. Das wirkt sich positiv auf den Wirkungsgrad im Lastbetrieb aus.

In einer vorteilhaften Ausprägung der Erfindung ist die Gleichrichterbrücke als sechspolige Brückenschaltung zum Anschluss an ein dreiphasiges Stromnetz ausgebildet. Besonders bei dreiphasigen Stromnetzen können aufgrund der hohen Zwischenkreisspannung als verkettete Netzspannung hohe Vorladeströme auftreten, weshalb hier einem ausreichend dimensionierten Vorladewiderstand besondere Bedeutung zukommt.

Die Erfindung betrifft des Weiteren eine Motorsteuerung, welche eine erfindungsgemäße Schaltungsanordnung umfasst und bei welcher alle Elemente der Motorsteuerung auf einem Schaltungsträger angeordnet sind. Die Nutzung des Bremswiderstands als Vorladewiderstand führt dazu, dass sich der ausreichend groß dimensionierte Widerstand nur geringfügig erwärmt und dass der Bauteilaufwand gegenüber Lösungen nach dem Stand der Technik reduziert ist. Mit der erfindungsgemäßen Schaltungsanordnung wird es deshalb möglich, eine Motorsteuerung mit allen Elementen zur Ansteuerung, zur Vorladung und zum bremsenden Betrieb auf einem Schaltungsträger anzuordnen. Damit wird die Baugröße der Motorsteuerung reduziert und ein zuverlässiger Schaltungsaufbau der Motorsteuerungselemente erreicht.

Ein erfindungsgemäßes Verfahren sieht vor, dass die erfindungsgemäße Schaltungsanordnung in der Weise betrieben wird, dass für den Zwischenkreiskondensator ein Vorladevorgang vorgesehen ist, bei welchem das zweite Schaltelement in der Weise geschaltet wird, dass ein Ladestrom über die Gleichrichterbrücke und den Bremswiderstand in den Zwischenkreiskondensators fließt.

Des Weiteren wird die erfindungsgemäße Schaltungsanordnung so betrieben, dass bei aufgeladenem Zwischenkreiskondensator das zweite Schaltelement in der Weise geschaltet wird, dass ein Laststrom über die Gleichrichterbrücke in den Zwischenkreiskondensator fließt.

Damit ist eine einfache Ansteuerung der erfindungsgemäßen Schaltungsanordnung gegeben, welche mittels kostengünstiger Steuerungsmittel durchführbar ist.

Die Erfindung wird nachfolgend in beispielhafter Weise unter Bezugnahme auf die beigefügte Figur erläutert. Es zeigt in schematischer Darstellung:

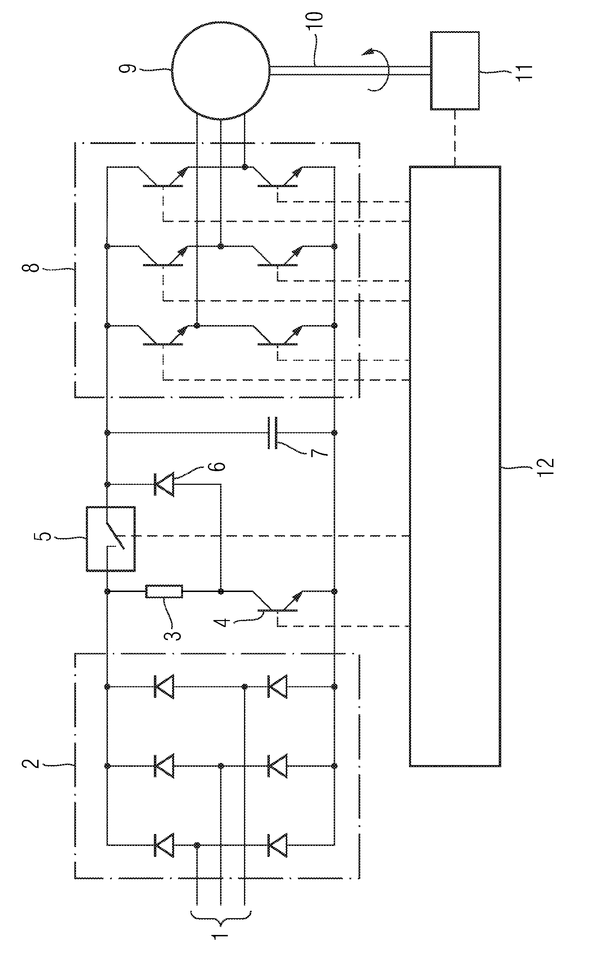

- Fig. 1: Antriebssystem mit Gleichrichterbrücke, Bremsschaltung und Wechselrichter

In der Figur ist ein Antriebssystem mit einem als Drehstrommotor ausgebildeten Elektromotor 9 dargestellt. Dieser ist über einen Wechselrichter 8, einen Zwischenkreis und eine Gleichrichterbrücke 2 an ein Stromnetz 1 mit drei Phasen angeschlossen. Parallel zu einem Zwischenkreiskondensator 7 ist eine Bremsschaltung mit einem Bremswiderstand 3 in Reihe mit einem als Transistor ausgebildeten ersten Schaltelement 4 angeordnet. In die Verbindung zwischen Bremswiderstand 3 und Zwischenkreiskondenstor 7 ist ein als Relais (z.B. einfacher Schließer) ausgebildetes zweites Schaltelement 5 geschaltet. Des Weiteren ist eine Freilaufdiode 6 angeordnet, welche einen Verbindungspunkt zwischen Bremswiderstand 3 und erstem Schaltelement 4 mit einem Verbindungspunkt zwischen Zwischenkreiskondensator 7 und zweitem Schaltelement 5 verbindet.

Anstelle des Wechselrichters 8 und des Drehstrommotors 9 ist beispielsweise auch ein Gleichstrommotor an die am Zwischenkreiskondensator 7 anliegende Zwischenkreisspannung anschließbar. Des Weiteren kann z.B. das Stromnetz als zweiphasiges Wechselspannungsnetz mit einer daran angeschlossenen vierpoligen Brückenschaltung ausgebildet sein.

Die Schaltelemente des Wechselrichters 8 werden ebenso wie das erste und das zweite Schaltelement 4 und 5 über eine Steuerung 12 ein- und ausgeschaltet. Die Schaltelemente des Wechselrichters 8 (z.B. IGBTs) werden dabei mittels pulsweitenmodulierter Gatesignale angesteuert. Dabei erfasst beispielsweise ein an der Motorwelle 10 angeordneter Messwertaufnehmer laufend die Drehzahl und den Rotorwinkel, wobei diese Messgrößen der Steuerung 12 als Eingangsgrößen für eine Motorregelung zugeführt sind.

Die Ansteuerung des ersten Schaltelements 4, mittels welchem der Bremswiderstand 3 parallel zum Zwischenkreiskondensator 7 schaltbar ist, erfolgt günstigerweise ebenfalls über ein pulsweitenmoduliertes Signal. Das Verhältnis der Ein- zur Ausschaltzeit des ersten Schaltelements 4 richtet sich dabei nach der rückgelieferten Energie im Generatorbetrieb des Elektromotors 9. Die im Bremswiderstand 3 verbrauchte rückgelieferte Energie senkt die Zwischenkreisspannung am Zwischenkreiskondensator 7.

Im Lastbetrieb ist das zweite Schaltelement 5 geschlossen (Relais im angezogen zustand). Das gilt einerseits für den Fall, dass der Elektromotor 9 eine Last antreibt und andererseits für den Generatorbetrieb, in welchem eine Last den Elektromotor 9 antreibt.

Das zweite Schaltelement 5 wird dann mittels Steuerung 12 geschaltet, wenn sich das Antriebssystem im Leerlauf befindet und der Zwischenkreiskondensator 7 vorgeladen wird. Der Vorladevorgang beginnt damit, dass das zweite Schaltelement 5 ausgeschaltet wird (z.B. durch das Öffnen eines Relaiskontakts). Aus dem Stromnetz 1 fließt ein Vorladestrom über die Gleichrichterbrücke 2, den Bremswiderstand 3 und die Freilaufdiode 6 in den Zwischenkreis und lädt den Zwischenkreiskondensator 7 auf.

Ohne einen Vorwiderstand würde aufgrund des unbelasteten Ausgangs des Antriebssystems die Spannung am Zwischenkreis im aufgeladenen Zustand etwa dem Produkt der verketteten Netzspannung mal der Wurzel aus zwei entsprechen. Der dann nur durch Netzimpetanzen und Widerstände im Ladekreis begrenzte impulsförmige Ladestrom wäre so hoch, dass er die Dioden der Gleichrichterbrücke oder Netzsicherungen vorschädigen oder zerstören würde.

Erfindungsgemäß wird der Spitzenwert des Vorladestromes durch den als Vorladewiderstand genutzten Bremswiderstand 3 so weit begrenzt, dass es zu keiner Beschädigung der Schaltungselemente kommen kann. Es wird ein Vorteil daraus gezogen, dass der Bremswiderstand 3 augrund seiner Hauptfunktion, rückgelieferte Energie zu verbrauchen, wesentlich größer dimensioniert ist als Vorwiderstände für Vorladeschaltungen nach dem Stand der Technik. Neben der Einsparung des Vorwiderstandes ist damit auch eine ausreichend hohe Sicherheit bezüglich der im Betrieb auftretenden Vorladezyklen gegeben.

Wenn der Zwischenkreiskondensator 7 aufgeladen ist, wird das zweite Schaltelement 5 wieder geschlossen (Anziehen eines Relais) und der Vorladevorgang ist beendet. Aus dem Stromnetz 1 fließt der betriebsmäßige Laststrom über die Gleichrichterbrücke 2 und das geschlossene zweite Schaltelement 5 in den Zwischenkreis.

Wenngleich die Erfindung anhand der in Figur 1 dargestellten Schaltungsanordnung gezeigt ist, kann sie auch mit anders aufgebauten Schaltungsanordnungen erfolgreich realisiert werden. Beispielsweise kann die Reihenanordnung des Bremswiderstands und des ersten Schaltelements vertauscht und das zweite Schaltelement im negativen Zweig des Zwischenkreises angeordnet sein.

## Patentansprüche

1. Schaltungsanordnung zum Anschließen eines Elektromotors (9) an ein Stromnetz (1), wobei ein Zwischenkreiskondensator (7) über eine Gleichrichterbrücke (2) mit dem Stromnetz (1) verbunden ist und wobei ein Bremswiderstand (3) vorgesehen ist, welcher in Reihe mit einem ersten Schaltelement (4) parallel zum Zwischenkreiskondensator (7) angeordnet ist, **dadurch gekennzeichnet, dass** ein zweites Schaltelement (5) vorgesehen ist, mittels welchem der Bremswiderstand (3) in Reihe zwischen den Zwischenkreiskondensator (7) und die Gleichrichterbrücke (2) schaltbar ist.

2. Schaltungsanordnung nach Anspruch 1, **dadurch gekennzeichnet, dass** der Zwischenkreiskondensator (7) mit einem ersten Anschluss an einen ersten Ausgang der Gleichrichterbrücke (2) angeschlossen ist und dass der Zwischenkreiskondensator (7) mit einem zweiten Anschluss über das zweite Schaltelement (5) an einen zweiten Ausgang der Gleichrichterbrücke (2) angeschlossen ist und dass des Weiteren der zweite Ausgang der Gleichrichterbrücke (2) über den Bremswiderstand (3) und das erste Schaltelement (4) an den ersten Anschluss des Zwischenkreiskondensators (7) geschaltet ist und dass ein Verbindungspunkt zwischen dem Bremswiderstand (3) und dem ersten Schaltelement (4) über eine Freilaufdiode (6) mit dem zweiten Anschluss des Zwischenkreiskondensators (7) verbunden ist.

3. Schaltungsanordnung nach Anspruch 1 oder 2, **dadurch gekennzeichnet, dass** das zweite Schaltelement (5) als Relais ausgebildet ist.

4. Schaltungsanordnung nach einem der Ansprüche 1 bis 3, **dadurch gekennzeichnet, dass** die Gleichrichterbrücke (2) als sechspolige Brückenschaltung zum Anschluss an ein dreiphasiges Stromnetz (1) ausgebildet ist.

5. Motorsteuerung, welche eine Schaltungsanordnung nach einem der Ansprüche 1 bis 4 umfasst, **dadurch gekennzeichnet, dass** alle Elemente der Motorsteuerung auf einem Schaltungsträger angeordnet sind.

6. Verfahren zum Betreiben einer Schaltungsanordnung nach einem der Ansprüche 1 bis 4, **dadurch gekennzeichnet, dass** für den Zwischenkreiskondensator (7) ein Vorladevorgang vorgesehen ist, bei welchem das zweite Schaltelement (5) in der Weise geschaltet wird, dass ein Ladestrom über die Gleichrichterbrücke (2) und den Bremswiderstand (3) in den Zwischenkreiskondensators (7) fließt.

7. Verfahren zum Betreiben einer Schaltungsanordnung nach einem der Ansprüche 1 bis 4, **dadurch gekennzeichnet, dass** bei aufgeladenem Zwischenkreiskondensator (7) das zweite Schaltelement (5) in der Weise geschaltet wird, dass ein Laststrom über die Gleichrichterbrücke (2) in den Zwischenkreiskondensator (7) fließt.
